# EUROPEAN PATENT APPLICATION

(11) **EP 2 590 470 A1**
(43) Date of publication of application: **08.05.2013**
(21) Application number: 11786118.7
(22) Date of filing: 03.06.2011
(51) Int. Cl.: H04W 80/00

(54) **WIRELESS COMMUNICATION SYSTEM, MACHINE-TYPE COMMUNICATION DEVICE, AND GATEWAY**

(30) Priority: 29.07.2010 CN 201010245335
(71) Applicant: Huawei Technologies Co., Ltd., Shenzhen, Guangdong 518129 (CN)
(72) Inventor: DENG, Yongfeng, Shenzhen Guangdong 518129 (CN); QIN, Jun, Shenzhen Guangdong 518129 (CN)
(74) Representative: Körber, Martin Hans
(86) International application number: PCT/CN2011/075239
(87) International publication number: WO 2011/147346

(57) **Abstract**

Embodiments of the present invention disclose a radio communication system, which includes: a machine type communication MTC device, where the MTC device is configured to access a gateway through a short-range wireless communication network. The gateway includes an access stratum and accesses a base station subsystem though the access stratum. The MTC device further includes a non-access stratum and exchanges signaling or transmits data, through the non-access stratum, with a non-access stratum of a core network where the base station subsystem is located. By adopting the embodiments of the present invention, in a situation of reducing a network load, the core network is capable of controlling and managing the MTC device, thereby improving security of the system.

## Description

This application claims priority to Chinese Patent Application No. 201010245335.1, filed with the Chinese Patent Office on July 29, 2010, and entitled "RADIO COMMUNICATION SYSTEM, MTC DEVICE, AND GATEWAY", which is incorporated herein by reference in its entirety.

### FIELD OF TECHNOLOGY

The present invention relates to the field of communications technologies, and in particular, to a radio communication system, an MTC device, and a gateway.

### BACKGROUND

The M2M (Machine to Machine) refers to that a machine device of one end, which generally is called an MTC (Machine Type Communication, machine type communication) device, transmits information to a monitor center of another end through a radio communication network, and the monitor center receives the information and processes the received information. For example, a petroleum exploitation device may acquire a working condition of a petroleum well and transmit, through a radio communication network, information of the working condition of the petroleum well to a monitor center; and the monitor center monitors and manages separated exploitation devices through the information.

A radio module is configured in an MTC device, and the MTC device directly accesses a radio communication network, so as to transmit data to a monitor center of another end, in this way, the network load is increased; and because a radio module needs to be configured in each MTC device, the cost of the MTC device is raised and the capital expenditure of an operator is increased at the same time.

To reduce the capital expenditure of the operation and lower the hardware cost of the MTC device, in the prior art, multiple MTC devices access a radio communication gateway (hereinafter referred to as gateway) through a PAN (Personal Area Network) personal area network, and the gateway accesses the radio communication network through a radio communication technology. In this manner, not only the gateway performs access stratum signaling exchange with a base station subsystem where the gateway is located, but also the gateway implements non-access stratum signaling exchange with a core network where the gateway is located. This manner is capable of lowering the network load and reducing the capital expenditure, but the operator cannot control and manage the MTC device; therefore, a huge potential security risk exists.

### SUMMARY

A problem to be solved in embodiments of the present invention is to provide a radio communication system, an MTC device, a core network, a gateway, and a base station subsystem, so as to improve security of an M2M system.

To solve the foregoing technical problem, in one aspect, the present invention provides a radio communication system, which includes a machine type communication MTC device, where the MTC device is configured to access a gateway via a short-range wireless communication network, and the MTC device further includes a non-access stratum, and exchanges signaling or transmits data, through the non-access stratum, with a non-access stratum of a core network where a base station subsystem is located, where the gateway includes an access stratum and accesses the base station subsystem through the access stratum.

An embodiment of the present invention provides an MTC device, which includes: a short-range wireless communication network access module, configured to access, through a short-range wireless communication network, a gateway where the MTC device is located, and report data of the MTC device through the short-range wireless communication network; and a non-access stratum processing module, configured to perform non-access stratum signaling exchange or data transmission with a non-access stratum processing module of a core network where the MTC device is located.

An embodiment of the present invention provides a gateway, which includes: a short-range wireless communication network access module, configured to connect, through a short-range wireless communication network, an MTC device covered by the gateway, and receive, through the short-range wireless communication network, information reported by the MTC device; an access stratum processing module, configured to access a base station subsystem by the gateway and perform signaling exchange or data transmission with an access stratum processing module of the base station subsystem; and a network adaptation module, configured in that the gateway performs network adaptation with the MTC device covered by the gateway.

Compared with the prior art, the embodiments of the present invention has the following main differences and effects:

In the embodiments of the present invention, the non-access stratum of the MTC device exchanges signaling or transmits data with the non-access stratum of the core network, so that the core network is capable of directly authenticating and managing the MTC device, and in the communication system of the present invention, the core network is capable of controlling and managing the MTC device in a situation of reducing the network load, thereby improving security of the system.

### BRIEF DESCRIPTION OF THE DRAWINGS

To illustrate the technical solutions in the embodiments of the present invention or in the prior art more clearly, the accompanying drawings needed for describing the embodiments or the prior art are briefly described in the following. Apparently, the accompanying drawings in the following description merely show some embodiments of the present invention, and persons of ordinary skill in the art may still derive other drawings from these accompanying drawings without creative effort.
FIG. 1 is a schematic structural diagram of a radio communication system according to an embodiment of the present invention;
FIG. 2 is a schematic structural diagram of a communication system protocol stack when based on a GSM packet service according to an embodiment of the present invention;
FIG. 3 is a schematic flow chart of implementation of a GPRS packet service by using a communication system according to an embodiment of the present invention;
FIG. 4 is a schematic structural diagram of a communication system protocol stack when based on an SMS service of a PS domain of a GSM system according to an embodiment of the present invention;
FIG. 5 is a schematic structural diagram of a communication system protocol stack when based on an SMS service of a CS domain of a GSM system according to an embodiment of the present invention;
FIG. 6 is a schematic flow chart of an SMS service when based on a GSM system according to an embodiment of the present invention;
FIG. 7 is a schematic structural diagram of a communication system protocol stack when based on a UMTS short message service according to an embodiment of the present invention;
FIG. 8 is a schematic structural diagram of a communication system protocol stack when based on a UMTS short message service according to another embodiment of the present invention;
FIG. 9 is a schematic structural diagram of a communication system protocol stack when based on a UMTS packet service according to an embodiment of the present invention;
FIG. 10 is a schematic structural diagram of a communication system protocol stack when based on a UMTS packet service according to another embodiment of the present invention;
FIG. 11 is a schematic structural diagram of a communication system protocol stack when based on an LTE short message service according to an embodiment of the present invention;
FIG. 12 is a schematic structural diagram of a communication system protocol stack when based on a packet service of an LTE system according to an embodiment of the present invention;
FIG. 13 is a schematic diagram of specific implementation of an authentication procedure of a GPRS system by using a system of the present invention;
FIG. 14 is a schematic flow chart of gateway selection or reselection executed by an MTC device according to network adaptation layer signaling in a method of the present invention;
FIG. 15 is a schematic flow chart of preset abnormal event processing in a method of the present invention;
FIG. 16 is a schematic structural diagram of an MTC device according to an embodiment of the present invention;
FIG. 17 is a schematic structural diagram of another MTC device according to an embodiment of the present invention;
FIG. 18 is a schematic structural diagram of an MTC device when based on a short message service of a PS domain of a GSM system according to an embodiment of the present invention;
FIG. 19 is a schematic structural diagram of an MTC device when based on an SMS service of a CS domain of a GSM system according to an embodiment of the present invention;
FIG. 20 is a schematic structural diagram of an MTC device when based on a GPRS packet service according to an embodiment of the present invention;
FIG. 21 is a schematic structural diagram of an MTC device when based on a UMTS short message service according to an embodiment of the present invention;
FIG. 22 is a schematic structural diagram of an MTC device when based on a UMTS short message service according to another embodiment of the present invention;
FIG. 23 is a schematic structural diagram of an MTC device when based on a UMTS packet service according to an embodiment of the present invention;
FIG. 24 is a schematic structural diagram of an MTC device when based on a UMTS packet service according to another embodiment of the present invention;
FIG. 25 is a schematic structural diagram of an MTC device when based on an SMS service of LTE according to an embodiment of the present invention;
FIG. 26 is a schematic structural diagram of an MTC device when based on an SMS service of LTE according to another embodiment of the present invention; and
FIG. 27 is a schematic structural diagram of a gateway according to an embodiment of the present invention.

### DETAILED DESCRIPTION

The technical solutions in the embodiments of the present invention are clearly and completely described in the following with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

To make the objectives, features and advantages of the embodiments of the present invention more comprehensible, the embodiments of the present invention are further illustrated in detail in the following with reference to the accompanying drawings and specific embodiments.

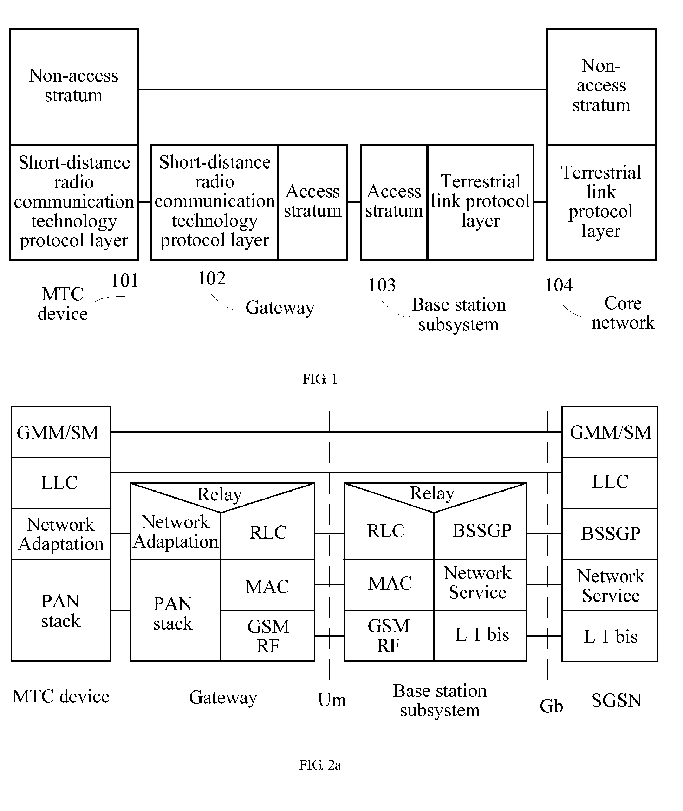

FIG. 1 is a schematic structural diagram of a radio communication system according to an embodiment of the present invention. As shown in FIG. 1, the radio communication system according to the embodiment of the present invention includes an MTC device 101, a gateway 102, a base station subsystem 103, and a core network 104.

The MTC device 101 is configured to access a radio communication gateway (hereinafter referred to as gateway) through a short-range wireless communication network, and report information of the MTC device to the gateway that the MTC device accesses, and specifically, the MTC device may access the short-range wireless communication network through a short-distance radio communication technology protocol layer.

The gateway 102 accesses the base station subsystem 103 through an access stratum, and it should be understood that, corresponding to that the MTC device 101 accesses the gateway 102 through the short-range wireless communication network, the gateway 102 covers MTC devices belonging to the gateway 102 itself through the short-range wireless communication network. That the gateway 102 accesses the base station subsystem through the access stratum 103can be implemented by an existing radio communication network, which is not elaborated here.

The MTC device 101 further exchanges signaling or transmits data, through a non-access stratum, with a non-access stratum of the core network 104 where the base station subsystem 103 is located. It should be understood that, in the radio communication system, the signaling exchange between the base station subsystem and the core network can be implemented by the prior art, which is not elaborated here.

The base station subsystem 103 includes: a terrestrial link protocol layer, configured to perform signaling exchange or data transmission with a terrestrial link protocol layer of the core network where the base station subsystem 103 is located; and an access stratum, configured to perform access stratum signaling exchange or data transmission with the gateway covered by the base station subsystem 103.

The core network 104 includes: a terrestrial link protocol layer, configured to perform terrestrial signaling exchange or data transmission with the terrestrial link protocol layer of the base station subsystem covered by the core network 104; and a non-access stratum, configured to perform non-access stratum signaling exchange or data transmission with the MTC device covered by the core network 104.

It should be understood that, specific protocol stacks included in non-access stratums in communication systems of different standards are defined in the 3GPP protocol. In this embodiment, when performing signaling exchange or data transmission with the core network 104 through a specific protocol layer of the non-access stratum, the MTC device 101 may perform signaling exchange or data transmission with the non-access stratum of the core network by using a non-access stratum protocol stack of communication systems of different standards on an MTC device. That is, when the non-access stratum is implemented on the MTC device, content of a non-access stratum of communication systems of different standards in the prior art may be used.

In the embodiment of the present invention, the non-access stratum in the radio communication system may include a service processing protocol layer, configured to process an MTC service, and a mobility management protocol layer, configured to perform mobility management, where, furthermore, the service processing protocol layer includes one or a combination of the following: a session management protocol layer, configured to manage the MTC service; and a service transmission protocol layer, configured to transmit MTC service data. Reference may be made to the prior art for the foregoing protocol layers and a coupling relationship between the protocol layers.

In addition, the non-access stratum may further include a logical link control LLC protocol layer, or an encryption protocol layer, configured to perform encryption. It should be understood that, the logical link control LLC protocol layer and the encryption protocol layer may encrypt data streaming exchanged between the MTC device and the core network. When a communication system protocol stack in the prior art includes a logical link control LLC protocol layer, in the non-access stratum of the MTC device, an existing logical link control LLC protocol layer may be adopted to perform encryption, and when the communication system protocol stack in the prior art does not include the logical link control LLC protocol layer, in the embodiment of the present invention, an encryption protocol layer may be added in the non-access stratum the MTC device, and reference may be made to an encryption protocol layer of other communication systems for specific implementation of the added encryption protocol layer. For example, when based on an SMS service of a CS domain of a GSM system, the non-access stratum does not include the LLC protocol layer, and in this embodiment, an encryption protocol layer (defined as a security protocol layer in the embodiment of the present invention) may be added in the non-access stratum of the MTC device.

In addition, in the MTC device, an access stratum upper layer of access stratum in an existing communication system may be further included, and the MTC device performs signaling exchange or transmits data with the base station subsystem through the access stratum upper layer of access stratum. Furthermore, the access stratum upper layer of access stratum may include a radio link control protocol layer RLC, configured to perform radio link control, and a radio resource control protocol layer RRC, configured to perform radio resource control. For example, when based on an SMS service of a UMTS communication system, it is found that, an existing non-access stratum does not include an LLC protocol layer, and an encryption function thereof is implemented in an RLC protocol layer of the access stratum, which may bring a security risk when the MTC device uploads a key to the gateway, and besides adding an encryption protocol layer in the non-access stratum of the MTC device, an access stratum protocol stack above the RLC layer that executes a security function, that is, an access stratum upper layer of access stratum protocol stack in the UMTS communication system, may be moved into the MTC device, and only two access stratum protocol stacks: a media access stratum MAC and a physical layer PHY are reserved in the gateway. At the moment, besides the non-access stratum, the access stratum upper layer of access stratum is further included in the MTC device.

In addition, in the foregoing embodiment, the gateway in the communication system is further configured to perform network adaptation with the MTC device, and correspondingly, the MTC device also performs network adaptation with an MTC device through a network adaptation function, the gateway and the MTC device are corresponding to each other, and in the embodiment of the present invention, for the convenience of illustration, only one aspect is described in detail. Specifically, the gateway performs the network adaptation with the MTC device through a network adaptation layer in one or a combination of the following manners: sending, by the gateway, broadcast information of a cell where the gateway is located to the MTC device, and sending, by the gateway, information of a preset event to the MTC device.

The gateway sends the broadcast information of cell information to an MTC device belonging to the gateway itself through the network adaptation, where the broadcast information may include an access technology adopted by a cell where the gateway is currently located, link quality of the cell where the gateway is currently located, load information of the cell where the gateway is currently located, and so on. According to the received broadcast information, the MTC device may select an appropriate gateway for being stationed in light of a gateway selection policy thereof. When the gateway where the MTC device is stationed has a fault and fails to perform the M2M communication, the MTC device may reselect another appropriate gateway for being stationed according to a corresponding reselection policy.

The gateway sends the information of the preset event to the MTC device belonging to the gateway itself through the network adaptation layer, where the preset event may be a stolen event occurring in the gateway, a foreign illegal intrusion event occurring in the gateway, an event that the gateway is jammed by an external wideband, an event that the gateway goes offline from the cell where the gateway is currently located, and so on. When the foregoing abnormal event occurs, the gateway may broadcast alarm information such as a PAM, a jamming (Jamming) indication, and an offline (offline) indication respectively to the MTC device belonging to the gateway itself, so as to instruct the MTC device to emergently reselect another gateway for communication and trigger a corresponding alarm procedure. The MTC device may also be configured to reselect a gateway according to the received information of a preset event.

In addition, in the foregoing embodiment of the radio communication system, when the MTC device reports data to the gateway or when the MTC device sends a connection request to the gateway, the gateway is further configured to establish a connection between the gateway and the base station subsystem for the MTC device. According to whether the connection is exclusively used by a single MTC device or is shared by multiple MTC devices, a corresponding communication mode may be classified into a private communication mode and a shared communication mode.

In the private communication mode, the gateway establishes an instance for each MTC device separately and makes an application to a network for establishing a private radio resource (radio resource, RR for short) connection for the MTC device. When receiving the connection request sent by the MTC device or receiving the data reported by the MTC device, the gateway triggers an RR connection establishment process. Data of different MTC devices under the same gateway is transmitted on respective private connections of different MTC devices, and the transmissions are independent of each other and are totally different communication processes of mobile terminals as viewed from a network side.

When the communication mode is the shared communication mode, in a situation that a connection is not established between the gateway and the base station subsystem, and when the MTC device reports the data to the gateway or the gateway receives the connection request sent by the MTC device, a shared connection is established between the gateway and the base station subsystem. However, if the connection is established between the gateway and the base station subsystem, when the gateway receives a connection request sent by other MTC devices or when other MTC devices report data to the gateway, a new connection is not established and the existing RR connection is directly multiplexed to perform the subsequent signaling exchange process. That is, in the shared communication mode, multiple MTC devices share (that is, multiplexing) an RR connection. Data transmission of different MTC devices on the shared RR connection is identified through a temporary logical link identifier (Temporary Logical Link Identifier, TLLI for short) or an added MM connection number.

In addition, in the foregoing embodiment, the short-range wireless communication network may be a short-range wireless communication network implemented by PAN radio technologies such as the wireless fidelity WiFi, zigbee, bluetooth (bluetooth), infrared data association (Infrared Data Association, IrDA for short), home radio frequency (Home RF) and ultra-wideband radio (Ultra-Wideband Radio), or may also be a short-range wireless communication network implemented by a radio air interface technology.

It should be understood that, in the foregoing embodiment, the gateway may access a base station subsystem that adopts any one of existing radio communication networks, for example, a base station subsystem that adopts a radio communication technology such as the GSM, or UMTS, or LTE.

In this embodiment, the MTC device performs non-access stratum signaling exchange with the core network; therefore, the core network may directly authenticate and manage the MTC device, thereby lowering the network cost and improving the security of the system in a situation of reducing the network load. In the communication system of this embodiment, the non-access stratum of the MTC device includes the logical link control LLC protocol layer or the encryption protocol layer to perform encryption, thereby improving the transmission security of the system. Alternatively, when the protocol layer of the system that the gateway accesses, which is configured to perform the encryption, is implemented in the access stratum upper layer of access stratum, in this embodiment, a protocol layer of the access stratum upper layer of access stratum is included in the MTC device and the encryption function is implemented on the MTC device, so as to avoid bringing a security risk when the MTC device uploads the key to the gateway. By using the network adaptation function in this embodiment, the gateway is capable of sending the broadcast message of the cell where the gateway is located to the MTC device in time and sends the information of the preset event to the MTC device when a preset event occurs. The gateway reselection module set on the MTC device may perform gateway reselection according to the received broadcast message and the information of the preset event. The gateway establishes the RR connection for the MTC device, so that the MTC device may transmit data on a private or shared RR connection.

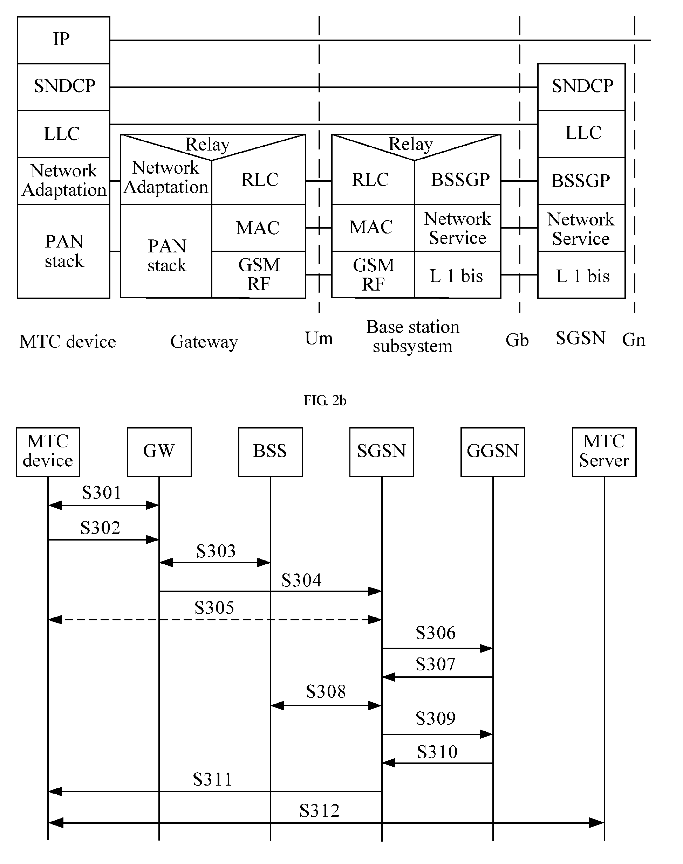

FIG. 2 is a schematic structural diagram of a communication system protocol stack when based on a GSM packet service according to an embodiment of the present invention. As shown in FIG. 2a, on a control plane, the structure of the communication system protocol stack includes:

Access stratum functions such as the RLC, MAC, and physical layer (GSM RF) are implemented on a gateway, and correspondingly, access stratum functions such as the RLC, MAC, and physical layer (GSM RF) are also equally implemented on a base station subsystem (Base Station Subsystem, BSS for short).

Terrestrial link protocol layers such as the base station subsystem GPRS protocol (Base Station Subsystem GPRS Protocol, BSSGP for short), network service (Network Service), and L1 (layer 1) are implemented on the base station subsystem, and correspondingly, terrestrial link protocol layers such as the BSSGP, Network Service, and L1 are also equally implemented on a core network SGSN.

An MTC device executes non-access stratum functions such as the SM, GMM, and LLC. A GMM layer executes a function relevant to user management, such as authentication; the MTC device authenticates an MTC device through the GMM protocol layer with the core network SGSN; an SM layer executes a session management function such as packet data protocol (Packet Data Protocol, PDP for short) activation; and the MTC device performs encryption with the core network SGSN through an LLC protocol layer, and it should be understood that, the encryption of the LLC protocol layer may be aimed at user data or aimed at signaling.

Correspondingly, non-access stratum functions such as the SM, GMM, and LLC are also equally implemented on the core network SGSN.

The MTC device further accesses the gateway through a short-range wireless communication network, and it may be known from the description of the foregoing embodiment that the short-range wireless communication network may be a radio communication network implemented by a standard protocol adopting PAN radio technologies such as the wireless fidelity WiFi, zigbee, bluetooth (bluetooth), infrared data association (Infrared Data Association, IrDA for short), home radio frequency Home RF, and ultra-wideband radio (Ultra-Wideband Radio) or implemented by a radio air interface technology.

In addition, the MTC device and the gateway may further include a network adaptation module, where the network adaptation module may be implemented by a network adaptation layer and may also implemented by a specific network adaptation function.

As shown in FIG. 2b, on a user plane, the structure of a communication system protocol stack includes: access stratum functions such as the RLC, MAC, and physical layer (GSM RF) are implemented on a gateway, and correspondingly, access stratum functions such as the RLC, MAC, and physical layer (GSM RF) are also equally implemented on a base station subsystem BBS.

Terrestrial link protocol layers such as the BSSGP, Network Service, and L1 are implemented on the base station subsystem, and correspondingly, terrestrial link protocol layers such as the BSSGP, Network Service, and L1 are also equally implemented on the core network SGSN.

The MTC device executes non-access stratum functions such as the subnetwork dependent convergence protocol (Subnetwork Dependence Convergence Protocol, SNDCP for short) and LLC. The MTC device performs header compression with the core network SGSN through the SNDCP protocol layer; and the MTC device performs encryption with the core network SGSN through the LLC protocol layer, and correspondingly, non-access stratum functions such as the SNDCP and LLC are also implemented on the core network SGSN. An IP application layer of the MTC device transparently transmits an IP package to a GGSN (not shown in the figure) through the core network, and correspondingly, an IP application layer is also implemented on the core network GGSN.

In this embodiment, because the GMM protocol layer that performs the authentication is set on the MTC device, a network side may effectively authenticate each MTC device under the gateway, so as to avoid problems such as an illegal access and a middle attack that are brought by an convergence effect formed by the gateway on the MTC device, and effectively maintain the safe operation of an operator network. In addition, because the encryption function is implemented in the LLC layer (LLC protocol layer), an IP package generated in an application layer is first delivered to the LLC layer, then the IP package is encrypted by the LLC layer, and later the IP package is forwarded by the gateway to a network. This processing mechanism effectively protects the transmission security of the M2M service.

FIG. 3 is a schematic flow chart of implementation of a GPRS packet service by using a communication system according to an embodiment of the present invention. It should be understood that, in the present invention, because a non-access stratum protocol stack in the communication system is located on an MTC device and a core network, when various services are implemented by using the communication system in the present invention, a function that needs to be executed or implemented by a non-access stratum protocol stack is implemented by a non-access stratum protocol stack on the MTC device. As shown in FIG. 3, the GPRS packet service procedure includes:
S301: The MTC device obtains a PAN network radio resource. Non-access stratum signaling and user data of the MTC device are both transparently transmitted between the MTC device and a gateway through a PAN radio technology such as Zigbee;
S302: The MTC device sends a PDP activation request to the gateway;
S303: After receiving the activation request message sent by the MTC device, the gateway triggers an RR connection establishment process of an air interface. It should be understood that, the RR connection establishment process may be a standard GSM RR connection establishment procedure, that is, to establish a private RR connection for each MTC device, and the RR connection establishment process may also be to establish a shared (multiplexed) RR connection for multiple MTC devices;
S304: After the RR connection is established, the gateway forwards the PDP activation request message to an SGSN through the connection to request a network to establish a bearing resource of a user plane;
S305: After receiving the activation request, the SGSN executes security functions such as authentication and encryption;
S306: After executing the security procedure, the SGSN sends a PDP context creation request to a GGSN to request the GGSN to establish a GTP (GPRS tunnel protocol) transmission tunnel;
S307: After finishing allocating a GTP tunnel resource, the GGSN sends a feedback message to the SGSN to confirm that the GTP tunnel is successfully established;
S308: The SGSN executes the QoS negotiation of a RAN side in coordination with a BSC;
S309: The SGSN sends a PDP context update request to the GGSN to request the GGSN to update, according to a QoS negotiation result of the RAN, a bearing QoS attribute of an established user plane;
S310: After updating the QoS attribute, the GGSN feed backs a PDP context update confirmation to the SGSN;
S311: The SGSN sends a PDP activation confirmation message to the MTC through transparent transmission of the gateway to confirm that the user plane is established;
S312: The MTC device executes an uplink data transmission procedure.

In this embodiment, the MTC device executes a non-access stratum function needed in the uplink data transmission procedure, so that the core network directly authenticates the MTC device, thereby improving the security of the uplink data transmission procedure.

It may be known from the above that, when based on different services of different systems, specific protocol stacks that are used are different, but it should be understood that, specific protocol stacks in the embodiment of the present invention may be implemented according to an existing protocol stack, and a coupling relationship between the protocol stacks may also be implemented with reference to the prior art. For a better understanding of the present invention, the following embodiments take a particular service of a particular system as an example for illustration; however, the present invention is not limited to the following specific embodiments. Any communication system that applies the idea of the present invention shall fall within the protection scope of the present invention.

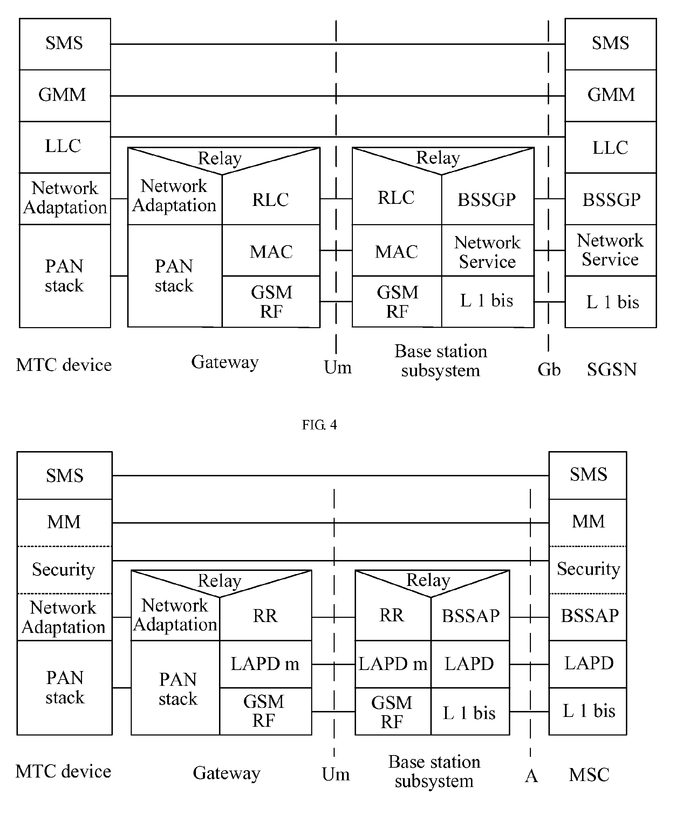

FIG. 4 is a schematic structural diagram of a communication system protocol stack when based on an SMS service of a PS domain of a GSM system according to an embodiment of the present invention.

As shown in FIG. 4, in this embodiment, GPRS access stratum functions such as the RLC, MAC, and physical layer (GSM RF) are implemented on a gateway, and correspondingly, access stratum functions such as the RLC, MAC, and physical layer (GSM RF) are also equally implemented on a base station subsystem BBS.

Terrestrial link protocol layers such as the BSSGP, Network Service, and L1 are implemented on the base station subsystem, and correspondingly, terrestrial link protocol layers such as the BSSGP, Network Service, and L1 are also equally implemented on the core network SGSN.

GPRS SMS non-access stratum functions such as the SMS, GMM, LLC are executed on an MTC device, and correspondingly, non-access stratum functions such as the SMS, GMM, LLC are also equally implemented on the core network SGSN. The MTC device authenticates an MTC device with the core network SGSN through a GMM protocol layer; and the MTC device encrypts an SMS short message with the core network SGSN through an LLC protocol layer. A short message sent by an SMS protocol layer is first delivered to the LLC layer, then the message is encrypted by the LLC layer, and later the message is forwarded by the gateway to a network. The MTC device transmits the SMS message with the core network SGSN through an SMS protocol layer. That is, after establishing a reliable GMM layer connection between the MTC device and the SGSN, the SMS protocol layer on the MTC device sends the SMS to a network side and reports information of the MTC device.

In this embodiment, because the GMM protocol layer that performs an authentication function is set on the MTC device, the network side can effectively authenticate each MTC device under the gateway, so as to avoid problems such as an illegal access and a middle attack that are brought by a convergence effect formed by the gateway on the MTC device.

FIG. 5 is a schematic structural diagram of a communication system protocol stack when based on an SMS service of a CS domain of a GSM system according to an embodiment of the present invention.

As shown in FIG. 5, in this embodiment, GSM access stratum functions such as the RR, channel link access procedure (Link Access Procedure on the Dm channel Dm, LAPDm for short), physical layer (GSM RF) are implemented on a gateway. Correspondingly, GSM access stratum functions such as the RR, LAPDm, and physical layer (GSM RF) are also equally implemented on a base station subsystem BBS.

Terrestrial link protocol layers such as the BSSAP, channel link access procedure (Link Access Procedure on the D channel D, LAPD for short), and L1 are implemented on the base station subsystem, and correspondingly, terrestrial link protocol layers such as the BSSAP, LAPD, and L1 are also equally implemented on a core network MSC.

GSM non-access stratum functions such as an SMS layer and an MM layer are implemented on an MTC device, and correspondingly, GSM non-access stratum functions such as an SMS layer and an MM layer are also equally implemented on the core network MSC. The MTC device authenticates an MTC device with the core network MSC through the MM protocol layer, where the MM layer executes a function relevant to user management such as authentication; and the SMS layer sends an SMS short message on an MM layer connection established between the MTC device and the MSC.

Because an encryption function of a CS domain of an existing GSM system is implemented by a PHY protocol layer in an access stratum, in the encryption procedure, the MTC device needs to upload a key generated in the authentication process of the MM layer to the gateway and the key is encrypted by the GSM RF of the gateway, in this way, the encrypted key of the MTC device is exposed to the gateway and a short-range wireless communication network, which may bring a great security risk.

Therefore, furthermore, in this embodiment, the MTC device and the core network MSC may further include an encryption protocol layer, that is, a Security protocol layer. The MTC device encrypts an SMS short message with the core network MSC through the Security protocol layer; and the MTC device transmits the SMS message with the core network SMC through the SMS protocol layer.

In this embodiment, the MM layer that performs the authentication is implemented on the MTC device, and the core network can effectively authenticate each MTC device, so as to avoid problems such as an illegal access and a middle attack that are brought by an convergence effect formed by the gateway on the MTC device, and effectively maintain the safe operation of an operator network. Because a new protocol layer, a security protocol layer, is added under the MM protocol layer of the MTC device and the MSC, and performs an encryption operation on a short message delivered by the SMS layer, so as to avoid a leakage when the key generated in the authentication process of the MM layer is uploaded to the gateway and guarantee the security of data transmission.

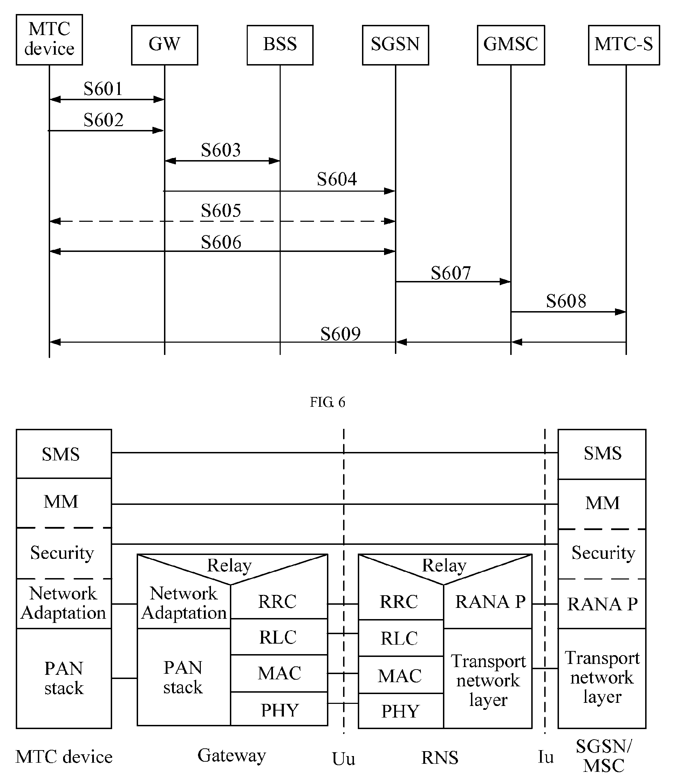

FIG. 6 is a schematic flow chart of an SMS service when based on a GSM system according to an embodiment of the present invention. As shown in FIG. 6, a report procedure of the GPRS SMS includes:
S601: An MTC device obtains a PAN network radio resource. Non-access stratum signaling of the MTC device is transparently transmitted between the MTC device and a gateway through a PAN radio technology such as Zigbee;
S602: The MTC device sends a CM (connection management) service request (CM Service Request) message to the gateway;
S603: After receiving the CM Service request message sent by the MTC device, the gateway triggers an RR connection establishment process of an air interface. The process may be a standard GSM RR connection establishment procedure;
S604: After the RR connection is established, the gateway forwards the CM Service request message to an MSC through the connection to request a network to establish an MM layer connection;
S605: After receiving the MM connection establishment request, the MSC executes security functions such as authentication and encryption;
S606: The MTC device initiates an SMS sending procedure on the air interface;
S607: The MSC sends a forward short message (short message forwarding) message to a gateway GMSC (gateway mobile switching center) and forwards the received SM;
S608: The GMSC sends a message transfer (message forwarding) message and forwards the SM to an M2M SC. A forwarding process of the SMS is consistent with an existing standard short message procedure;
S609: The M2M SC sends, to a terminal, a confirmation that the SMS is received.

In this embodiment, the MTC device executes a non-access stratum function needed in an uplink data transmission procedure, so that the core network directly authenticates the MTC device, thereby improving the security of the uplink data transmission procedure.

FIG. 7 is a schematic structural diagram of a communication system protocol stack when based on a UMTS short message service according to an embodiment of the present invention.

As shown in FIG. 7, in this embodiment, the communication system implements access stratum functions such as the RRC, RLC, MAC, and physical layer (PHY) on a gateway, and correspondingly, the communication system implements access stratum functions such as the RRC, RLC, MAC, and physical layer (PHY) on a radio network subsystem RNS (Radio Network Subsystem).

Terrestrial link protocol layers such as the RANAP (radio access network application protocol) and Transport network layer (transport network layer) are implemented on the radio network subsystem, and correspondingly, terrestrial link protocol layers such as the RANAP and the Transport network layer are also equally implemented on a core network SGSN.

Non-access stratum functions such as the SMS and MM are executed on an MTC device, and correspondingly, non-access stratum functions such as SMS and MM are implemented on the core network. The MTC device authenticates an MTC device with a core network SGSN/MSC through an MM protocol layer; and the MTC device transmits an SMS message with the core network SGSN/MSC through an SMS protocol layer.

Furthermore, an encryption protocol layer may be further included in the MTC device, that is, a Security protocol layer; and the MTC device encrypts the SMS short message with the core network SGSN/MSC through the Security protocol layer.

In this embodiment, because the MM protocol layer that performs an authentication function is set on the MTC device, a network side may effectively authenticates each MTC device under the gateway, so as to avoid problems such as an illegal access and a middle attack brought by an convergence effect formed by the gateway on the MTC device, and effectively maintain the safe operation of an operator network. An encryption protocol layer is added in two ends of the core network and the MTC device respectively. The short message sent by the SMS protocol layer is first delivered to the encryption protocol layer, then the message is encrypted by the encryption protocol layer, and later the message is forwarded by the gateway to a network. This processing mechanism effectively protects the transmission security of the M2M service.

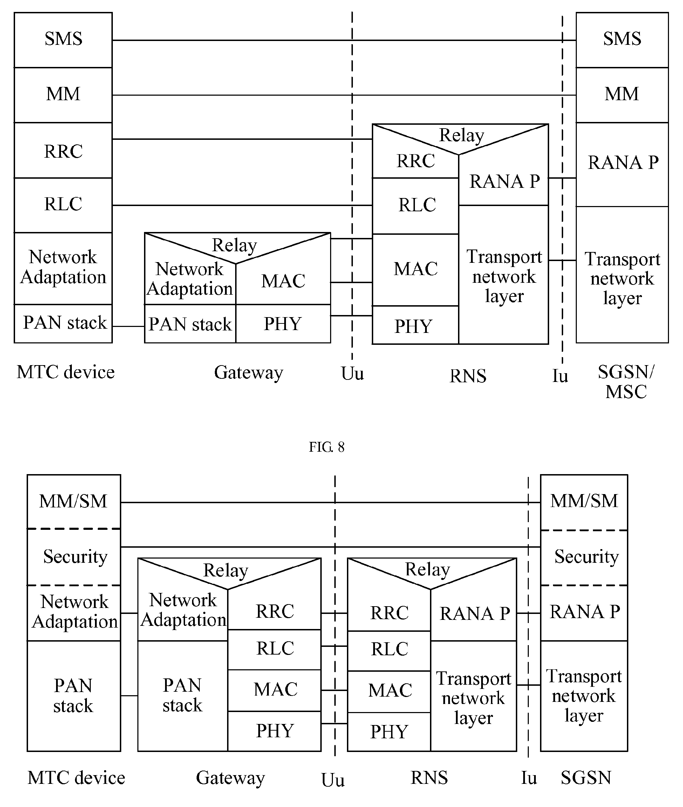

FIG. 8 is a schematic structural diagram of a communication system protocol stack when based on a UMTS short message service according to another embodiment of the present invention.

As shown in FIG. 8, this embodiment may be based on the embodiment corresponding to FIG. 7, and the difference lies in that: in this embodiment, an access stratum protocol stack above an RLC layer that performs a security function is moved from a GW to an MTC device. The GW only reserves two access stratum protocol stacks being MAC and PHY.

Specifically, access stratum functions such as the MAC and physical layer (PHY) are implemented on a gateway, and correspondingly, access stratum functions such as the MAC and physical layer (PHY) are implemented on a radio network subsystem RNS.

Terrestrial link protocol layers such as the RANAP and Transport network layer are implemented on the radio network subsystem RNS, and correspondingly, terrestrial link protocol layers such as the RANAP and Transport network layer are also equally implemented on a core network MSC/SGSN.

Non-access stratum functions such as the SMS and MM are executed on the MTC device and access stratum functions such as the RRC and RLC are executed on the MTC device, and correspondingly, non-access stratum functions such as the SMS and MM are implemented on the core network and access stratum functions such as the RRC and RLC are implemented on a base station subsystem. The MTC device authenticates an MTC device with a core network SGSN/MSC through an MM protocol layer; and the MTC device transmits an SMS message with the core network SGSN/MSC through an SMS protocol layer. The MTC device encrypts the SMS short message with the RNS through an RLC protocol layer; and the MTC device performs radio resource control with the RNS through an RRC protocol layer.

In this embodiment, because the MM protocol layer that performs an authentication function is set on the MTC device, a network side may effectively authenticates each MTC device under the gateway, so as to avoid problems such as an illegal access and a middle attack that are brought by an convergence effect formed by the gateway on the MTC device, and effectively maintain the safe operation of an operator network. The short message sent by the SMS protocol layer is first delivered to the RLC layer, then the message is encrypted by the RLC layer, and later the message is forwarded by the gateway to a network. This security improvement mechanism does not change an existing protocol stack, so as to guarantee a smooth evolution from a conventional UMTS to a distributed M2M communication system.

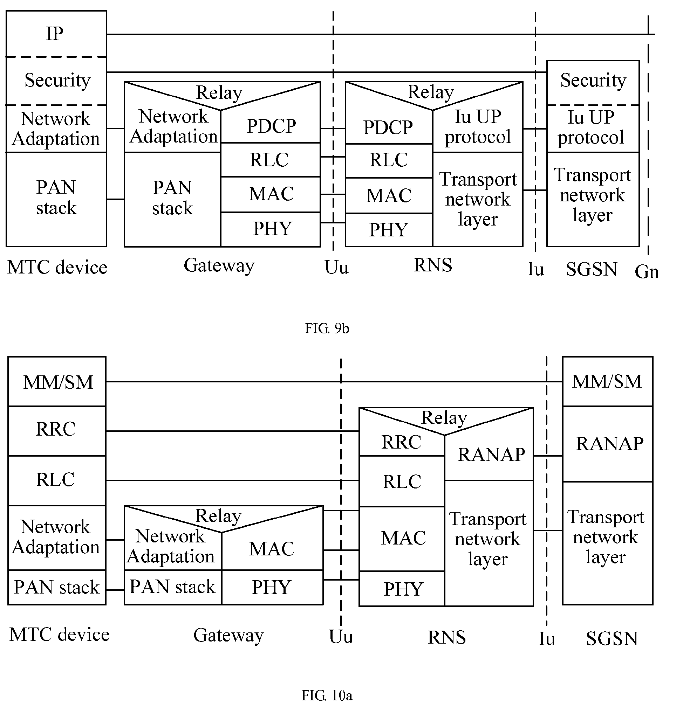

FIG. 9 is a schematic structural diagram of a communication system protocol stack when based on a UMTS packet service according to an embodiment of the present invention. As shown in FIG. 9a, on a control plane, the structure of the communication system protocol stack includes:

Access stratum functions such as the RRC, RLC, MAC and physical layer (PHY) are implemented on a gateway, and correspondingly, access stratum functions such as the RRC, RLC, MAC and physical layer (PHY) are implemented on a radio network subsystem RNS.

Terrestrial link protocol layers such as the RANAP and Transport network layer are implemented on the radio network subsystem RNS, and correspondingly, terrestrial link protocol layers such as the RANAP and Transport network layer are also equally implemented on a core network SGSN.

Non-access stratum functions such as the SM and MM are executed on an MTC device, and correspondingly, non-access stratum functions such as SM and MM are implemented on the core network. The MTC device authenticates an MTC device with the core network SGSN through an MM protocol layer; an SM layer executes a session management function such as PDP activation; and the device performs session management with the core network SGSN through the SM protocol layer.

Furthermore, an encryption protocol layer may be further included in the MTC device, that is, a Security protocol layer, and the MTC device performs encryption with the core network SGSN through the Security protocol layer.

As shown in FIG. 9b, on a user plane, the structure of the communication system protocol stack includes:

Access stratum functions such as the PDCP, RLC, MAC and physical layer (PHY) are implemented on the gateway, and correspondingly, access stratum functions such as the PDCP, RLC, MAC and physical layer (PHY) are implemented on the radio network subsystem RNS.

Terrestrial link protocol layers such as the Iu up Protocol and Transport network layer are implemented on the radio network subsystem RNS, and correspondingly, terrestrial link protocol layers such as the Iu up Protocol (Iu user plane protocol) and Transport network layer are also equally implemented on the core network SGSN.

An IP application layer is executed on the MTC device and the MTC device transparently transmits an IP package to a GGSN through the IP application layer.

Furthermore, on the user plane, the MTC device and the core network may further include an encryption protocol layer, that is, a Security protocol layer. The MTC device encrypts a service with the core network SGSN through the Security protocol layer.

In this embodiment, because the MM protocol layer that performs an authentication function is set on the MTC device, a network side can effectively authenticates each MTC device under the gateway, so as to avoid problems such as an illegal access and a middle attack that are brought by an convergence effect formed by the gateway on the MTC device, and effectively maintain the safe operation of an operator network. In data transmission, because an encryption function of the UMTS is implemented in the RLC protocol layer of the access stratum and a security protocol layer is added in two ends of the SGSN and the MTC device respectively. The protocol layer is configured to execute an encryption/decryption function in a packet transfer process. An IP data package generated in the application layer is first delivered to the security layer, then the package is encrypted by the security layer, and later the package is forwarded by the gateway to a network. This processing mechanism effectively protects the transmission security of the M2M service.

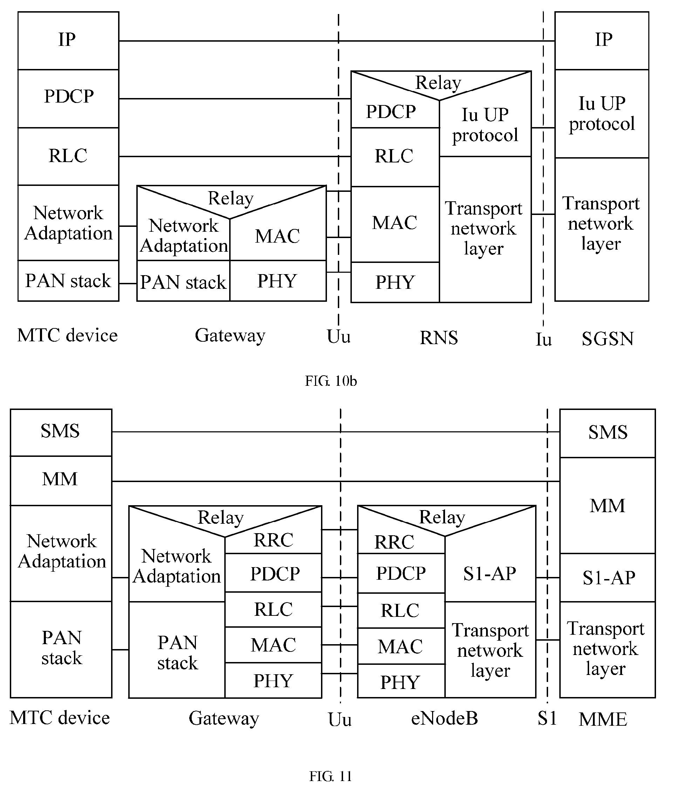

FIG. 10 is a schematic structural diagram of a communication system protocol stack when based on a UMTS packet service according to another embodiment of the present invention. As shown in FIG. 10a, on a control plane, the structure of the communication system protocol stack includes:

This embodiment may be based on the embodiment corresponding to FIG. 9, and the difference lies in that: in this solution, an access stratum protocol stack above an RLC layer that executes a security function in the UMTS is moved from a GW to an MTC device. The GW only reserves two access stratum protocol stacks being MAC and PHY.

Specifically, as shown in FIG. 10a, on the control plane, the MTC device exchanges signaling, through a non-access stratum, with a core network where a base station subsystem is located. Access stratum functions such as the MAC and physical layer (PHY) are implemented on a gateway, and correspondingly, access stratum functions such as the MAC and physical layer (PHY) are implemented on a radio network subsystem RNS.

Terrestrial link protocol layers such as the RANAP and Transport network layer are implemented on the radio network subsystem RNS, and correspondingly, terrestrial link protocol layers such as the RANAP and Transport network layer are also equally implemented on a core network SGSN.

Non-access stratum functions such as the SM and MM are executed on an MTC device, and correspondingly, non-access stratum functions such as the SM and MM are implemented on the core network. The MTC device authenticates an MTC device with the core network SGSN through an MM protocol layer; an SM layer executes a session management function such as PDP activation; and the device performs session management with the core network SGSN through the SM protocol layer.

Access stratum functions such as the RRC and RLC are further executed on the MTC device, and correspondingly, access stratum functions such as the RRC and RLC are also implemented on the radio network subsystem RNS. The MTC device performs encryption with the base station subsystem through an RLC protocol layer; and the MTC device performs radio resource control with the base station subsystem through an RRC protocol layer.

As shown in FIG. 10b, on a user plane, access stratum functions such as the MAC and physical layer (PHY) are implemented on the gateway, and correspondingly, access stratum functions such as the MAC and physical layer (PHY) are implemented on the radio network subsystem RNS.

Terrestrial link protocol layers such as the Iu UP and Transport network layer are implemented on the radio network subsystem RNS, and correspondingly, terrestrial link protocol layers such as the Iu UP and Transport network layer are also equally implemented on a core network SGSN.

Access stratum functions such as PDCP and RLC are performed on the MTC device, and correspondingly, access stratum functions such as PDCP and RLC are also implemented on the radio network subsystem RNS. The MTC device encrypts a service with the base station subsystem through the RLC protocol layer, and the MTC device performs header compression with the base station subsystem through a PDCP protocol layer. The MTC device further includes an IP application layer.

In this embodiment, an IP package generated in an application layer is first delivered to the RLC layer, then the IP is encrypted by the RLC layer, and later the IP is forwarded by the gateway to a network. This security improvement mechanism does not change an existing protocol stack, so as to guarantee a smooth evolution from a conventional UMTS to a distributed M2M communication system.

FIG. 11 is a schematic structural diagram of a communication system protocol stack when based on an LTE short message service according to an embodiment of the present invention.

As shown in FIG. 11, in this embodiment, access stratum functions such as the RRC, PDCP, RLC, MAC, and physical layer (PHY) are implemented on a gateway, and correspondingly, access stratum functions such as the RRC, PDCP, RLC, MAC, and physical layer (PHY) are implemented on an eNodeB.

Terrestrial link protocol layers such as the S1-AP (S1 interface application protocol) and Transport network layer are implemented on the eNodeB, and correspondingly, terrestrial link protocol layers such as the S1-AP and Transport network layer are also equally implemented on a core network MME (mobility management entity).

Non-access stratum functions such as the SMS and MM are executed on an MTC device. Specifically, the MTC device authenticates an MTC device with the core network MME through an MM protocol layer and encrypts an SMS short message in a service transmission process; and the MTC device transmits the SMS message with the core network MME through an SMS protocol layer.

In this embodiment, because an MM layer executes a function relevant to user management such as authentication, a network may effectively confirm a service use condition of each MTC device under the gateway, so as to avoid problems such as an illegal access and a middle attack that are brought by an convergence effect formed by the gateway on the MTC device, and effectively maintain the safe operation of an operator network. After a reliable MM layer connection is established between the MTC device and the MME, the SMS protocol layer on the MTC device sends the SMS to the network, thereby effectively protecting the transmission security of the M2M service.

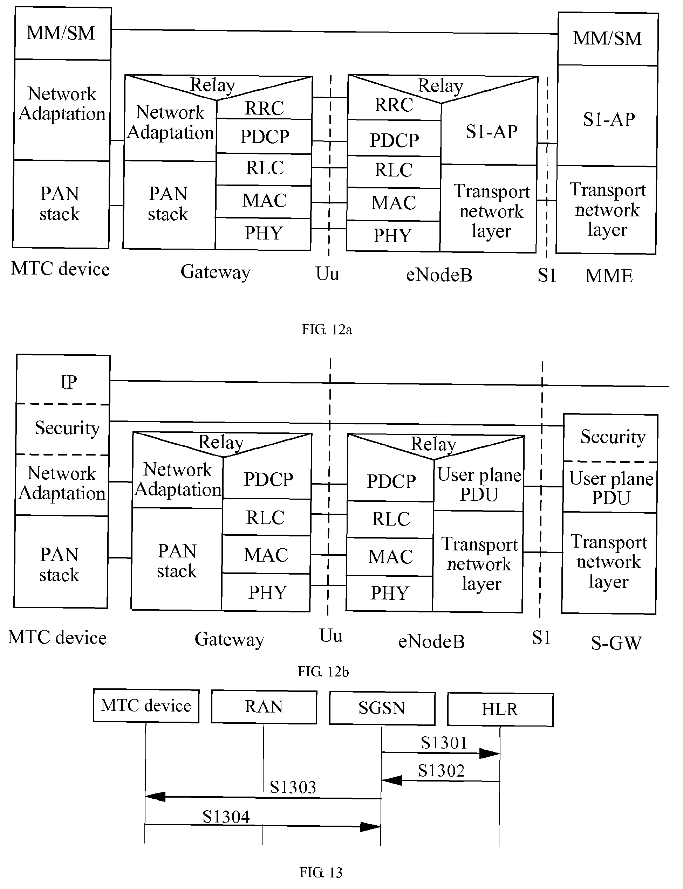

FIG. 12 is a schematic structural diagram of a communication system protocol stack when based on a packet service of an LTE system according to an embodiment of the present invention. As shown in FIG. 12a, on a control plane, the structure of the communication system protocol stack includes:

Access stratum functions such as the RRC, PDCP, RLC, MAC, and physical layer (PHY) are implemented on a gateway, and correspondingly, access stratum functions such as the RRC, PDCP, RLC, MAC, and physical layer (PHY) are implemented on an eNodeB.

Terrestrial link protocol layers such as the S1-AP and Transport network layer are implemented on the base station, and correspondingly, terrestrial link protocol layers such as the S1-AP and Transport network layer are also equally implemented on a core network MME.

An MTC device executes non-access stratum functions of a packet domain, such as the SM and MM. An MM layer executes a function relevant to user management such as authentication; the MTC device authenticates an MTC device with the core network MME through the MM protocol layer and encrypts an SMS short message in a service transmission process; an SM layer executes a function such as session management; and the MTC device performs session management with the core network MME through the SM protocol layer.

As shown in FIG. 12b, on a user plane, the structure of the communication system protocol stack includes:

In this embodiment, access stratum functions such as that PDCP, RLC, MAC, and physical layer (PHY) are implemented on the gateway, and correspondingly, access stratum functions such as the PDCP, RLC, MAC, and physical layer (PHY) are implemented on the eNodeB.

Terrestrial link protocol layers such as the user plane PDU and Transport network layer are implemented on an eNodeB, and correspondingly, terrestrial link protocol layers such as the user plane PDU and Transport network layer are also equally implemented on a core network S-GW.

The MTC device executes a non-access stratum function of a packet, such as IP data package transmission.

Furthermore, on the user plane, the MTC device and the core network further include an encryption protocol layer, that is, a Security protocol layer; and the MTC device encrypts a service with the core network S-GW through the Security protocol layer.

In access control, the MM layer executes a function relevant to user management such as authentication, so as to avoid problems such as an illegal access and a middle attack that are brought by a convergence effect formed by the gateway on the MTC device, and effectively maintain safe operation of an operator network. In data transmission, an encryption function of the control plane of the LTE is implemented in the MM protocol layer of the non-access stratum. Control signaling generated by the MTC device is first encrypted by the MM layer and then is forwarded by the gateway to the network, so as to guarantee the reliability of signaling exchange controlled by the distributed M2M communication system. On the user plane, because the encryption function of the LTE is implemented in the PDCP protocol layer of an access stratum, in order to avoid a security risk caused when the MTC device uploads a key to the GW, a security protocol layer is added in two ends of the S-GW and the MTC device respectively. The protocol layer is configured to execute an encryption/decryption function in a packet transfer process. An IP data package generated in the application layer is first delivered to the security layer, then the package is encrypted by the security layer, and later the package is forwarded by the gateway to a network. This processing mechanism effectively protects the transmission security of the M2M service.

Another embodiment of the present invention provides a method for performing authentication by using a method of the present invention. Because an authentication procedure belongs to a public procedure of a mobility management procedure (MM), however, in the method of the present invention, non-access stratum signaling is transmitted between an MTC device and a core network, the signaling transmission is completed in a manner of adopting an access network subsystem, by two ends of the core network and the MTC device, to transparently transmit non-access stratum NAS upper layer signaling, and a corresponding authentication procedure is also performed between the MTC device and the core network. In this embodiment, a protocol layer that executes the authentication and the authentication procedure are not changed, but subjects that execute the authentication are the MTC device and the core network. Specifically, in different communication systems, according to existing protocols, protocol stacks that execute the authentication procedure are different.

A GPRS system is taken as an example to illustrate how the authentication procedure is specifically implemented in a method of the present invention. FIG. 13 is a schematic diagram of specific implementation of an authentication procedure of a GPRS system by using a system of the present invention. As shown in FIG. 13, in the method of the present invention, the authentication procedure of the GPRS system includes:
S1301: If an SGSN does not store a triplet for authenticating an MTC device, the SGSN sends Send Authentication Info to an HLR. The message carries an international mobile subscriber identity (International Mobile Subscriber Identity, IMSI for short) number of the MTC device;
S1302: The HLR searches for an authentication triplet of the MTC device according to an IMSI number of a terminal and feeds back the triplet to the SGSN;
S1303: The SGSN sends an authentication request message to the MTC device, where the message carries a random number RAND;
S1304: The MTC device applies the random number to perform authentication calculation, and feeds back a response value, a signed response (signed responseL, SRES for short), to the SGSN. Specific implementation of the authentication calculation and the response process may be implemented by a method of the prior art.

An authentication procedure in non-access stratum signaling is performed between the MTC device and the core network, so that the core network may identify the MTC device and perform management and control aimed at the MTC device, thereby improving the reliability.

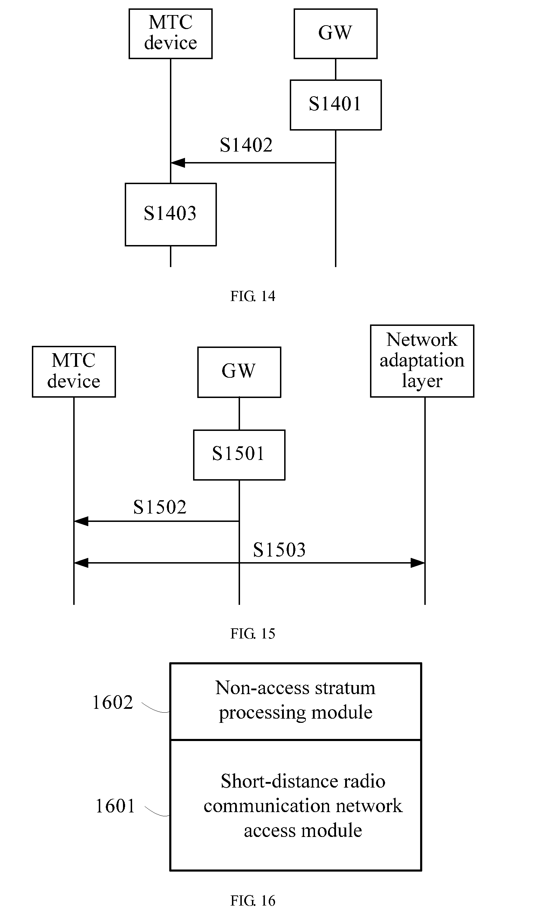

FIG. 14 is a schematic flow chart of gateway selection or reselection executed by an MTC device according to network adaptation layer signaling in a method of the present invention. As shown in FIG. 14, in the method of the present invention, the MTC device executes a procedure of gateway selection or reselection according to the network adaptation layer signaling, which includes:
S 140 1: The gateway obtain cell information of a radio communication network cell where the gateway is stationed, where the information includes an access technology to which a cell where the gateway is currently stationed belongs, link quality of the cell where the gateway is currently stationed, load of the cell where the gateway is currently stationed, and so on;
S 1402: The gateway sends a broadcast message of the cell information to the MTC device belonging to the gateway itself, and broadcasts the cell information of the radio communication network cell where the gateway is stationed in a PAN network;
S 1403: According to the received broadcast information, the MTC device may select an appropriate gateway for being stationed in light of a gateway selection/reselection policy.

Signaling exchange of the network adaptation layer performed by the MTC device and the gateway where the MTC device is located may include: information exchange of a preset event, performed by the MTC device and gateway where the MTC device is located. If an abnormal event such as a stole event occurring in the gateway, a foreign illegal intrusion event occurring in the gateway, an event that the gateway is jammed by an external wideband, or an event that the gateway goes offline from the cell where the gateway is currently located occurs, the gateway may broadcast alarm information such as a PAM, a Jamming indication, and an offline indication respectively to the MTC device belonging to the gateway itself, so as to instruct the MTC device to emergently reselect another gateway for communication, and trigger a corresponding alarm procedure.

FIG. 15 is a schematic flow chart of preset abnormal event processing in a method of the present invention. As shown in FIG. 15, the procedure of processing a preset abnormal event in the method of the present invention includes:
S1501: A gateway detects that a preset abnormal event occurs, where the preset abnormal event may include: a stolen event occurring in the gateway, a foreign illegal intrusion event occurring in the gateway, an event that the gateway is jammed by an external wideband, an event that the gateway goes offline from a cell where the gateway is currently located, and so on;
S1502: The gateway broadcasts, to an MTC device belonging to the gateway itself, abnormal information that the gateway has detected;
S1503: The MTC device reselects another gateway according to a reselection policy and executes a preset abnormal event alarming procedure.

In this embodiment, the MTC device performs network adaptation layer signaling exchange with the gateway where the MTC device is located, so that the MTC device can learn in time a state of a cell where the MTC device is located and the abnormal event of the system where MTC device is located, and then the MTC device can perform reselection or activate a corresponding measure in time, thereby improving the robustness of the communication method of the M2M system.

An embodiment of the present invention provides an MTC device. FIG. 16 is a schematic structural diagram of an MTC device according to an embodiment of the present invention. The MTC device includes:
a short-range wireless communication network access module 1601, configured in that the MTC device accesses a gateway, where the MTC device is located, and reports data through a short-range wireless communication network; and
a non-access stratum processing module 1602, configured to perform non-access stratum signaling exchange or data transmission with a non-access stratum processing module of a core network where the MTC device is located.

In this embodiment, the short-range wireless communication network access module set in the MTC device may make multiple MTC devices access the same gateway, and then make the gateway access a radio communication system through an existing radio communication network; and the non-access stratum processing module can make a core network directly perform non-access stratum signaling exchange with the MTC device, thereby directly managing and controlling the MTC device and improving the security of the system in a situation of reducing the network load.

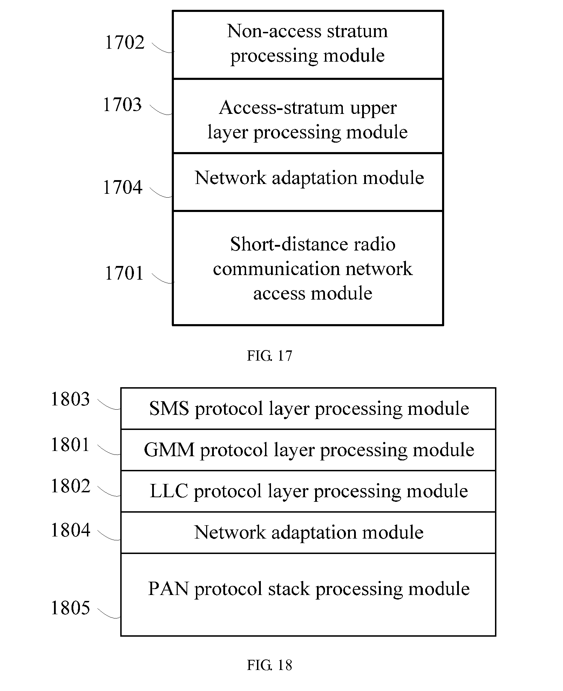

An embodiment of the present invention provides another MTC device. FIG. 17 is a schematic structural diagram of another MTC device according to an embodiment of the present invention. The MTC device includes: a short-range wireless communication network access module 1701 and a non-access stratum processing module 1702. Reference may be made to the embodiment corresponding to FIG. 17 for specific functions. The MTC device further includes:
an access stratum upper layer of access stratum processing module 1703, configured in that the MTC device exchanges signaling or transmits data with an access stratum upper layer of access stratum processing module of a base station subsystem through the access stratum upper layer of access stratum processing module, where it should be understood that, the access stratum upper layer of access stratum may include an RLC protocol layer and an RRC protocol layer.

Furthermore, the MTC device may further include:
a network adaptation module 1704, configured to perform network adaptation with a gateway where the MTC device is located.

Furthermore, the network adaptation module may be configured to receive broadcast information sent by the gateway where the MTC device is located, or configured to receive information of a preset event occurring in the gateway where the MTC device is located.

Specifically, the broadcast information may include an access technology to which a cell where the gateway is currently stationed belongs, link quality of the cell where the gateway is currently stationed, load of the cell where the gateway is currently stationed, and so on. The preset event may be a stolen event occurring in the gateway, a foreign illegal intrusion event occurring in the gateway, an event that the gateway is jammed by an external wideband, an event that the gateway goes offline from the cell where the gateway is currently located, and so on.

In addition, the MTC device further includes: a gateway reselection module, configured to perform gateway reselection according to information received by the network adaptation module.

Specifically, according to the received broadcast information, the gateway reselection module may select an appropriate gateway for being stationed in light of a gateway selection policy thereof. When the gateway where the MTC device is stationed has a fault and fails to perform the M2M communication, the gateway reselection module can reselect another appropriate gateway for being stationed according to a corresponding reselection policy.

In the foregoing embodiment, the short-range wireless communication network access module is one or a combination of the following: a wireless fidelity WiFi module, a zigbee module, a bluetooth module, an IrDA module, a home radio frequency Home RF module, and an ultra-wideband radio UWB module, or may be a PAN protocol stack processing module. For the convenience of illustration, the PAN STACK is adopted in subsequent embodiments and schematic diagrams for illustration.

In this embodiment, in communication systems of some particular standards, the access stratum upper layer of access stratum processing module is moved down to the MTC device, so that a service may be encrypted by the access stratum upper layer of access stratum processing module in the MTC and then is forwarded by the gateway to a network, thereby improving the security of the service without changing an existing protocol stack processing module. In addition, the MTC device can obtain, from the network adaptation module, the information of the cell or the communication system where the MTC device is located and can obtain a state of the system and itself in time; and the gateway reselection module can perform gateway reselection in time according to the foregoing information, thereby improving the service stability of the MTC device.

FIG. 18 is a schematic structural diagram of an MTC device when based on a short message service of a PS domain of a GSM system according to an embodiment of the present invention. As shown in FIG. 18, the MTC device includes a PAN protocol stack processing module 1805, configured to access a gateway; a network adaptation module 1804, configured to perform network adaptation; and a non-access stratum processing module. The PAN protocol stack processing module is configured to transmit data between the gateway and the MTC device and may be implemented by the prior art. The network adaptation module is configured to perform network adaptation with the gateway where the MTC device is located. Specifically, the non-access stratum processing module of the MTC device includes:
a GMM protocol layer processing module 1801, which may be configured to authenticate the MTC device with a core network SGSN through the GMM protocol layer processing module; an LLC protocol layer processing module 1802, configure to encrypt an SMS short message with a LLC protocol layer processing module of the core network SGSN; and an SMS protocol layer processing module 1803, configured to transmit an SMS message with a SMS protocol layer processing module of the core network SGSN.

In this embodiment, the MTC device includes the GMM layer processing module that can perform an authentication function, so as to avoid problems such as an illegal access and a middle attack introduced by a convergence effect formed by the gateway on the MTC device; and the MTC device includes the LLC layer processing module that can perform encryption, thereby guaranteeing the transmission security of the service.

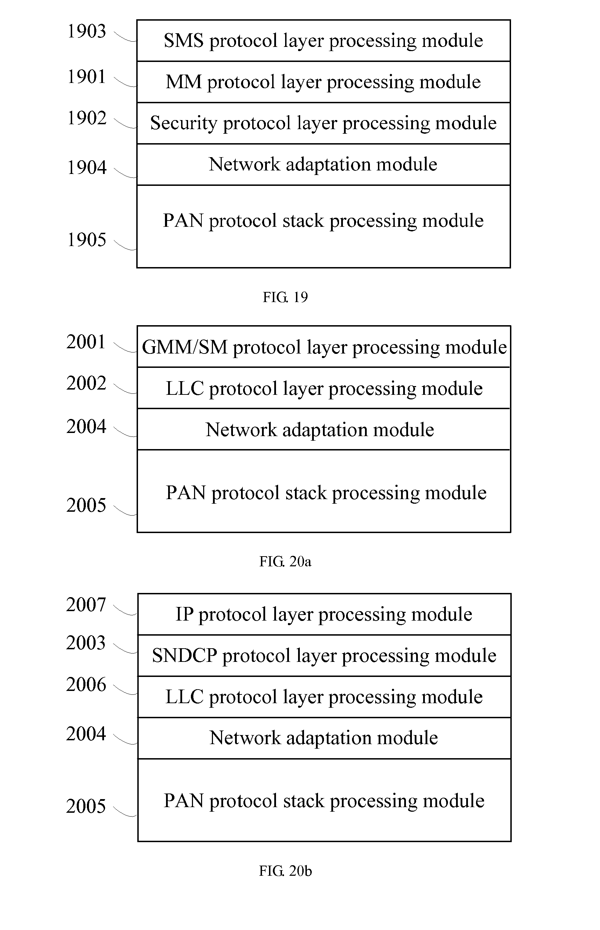

FIG. 19 is a schematic structural diagram of an MTC device when based on an SMS service of a CS domain of a GSM system according to an embodiment of the present invention. As shown in FIG. 19, the MTC device includes a PAN protocol stack processing module 1905, configured to access a gateway; a network adaptation module 1904, configured to perform network adaptation; and a non-access stratum processing module, where the PAN protocol stack processing module may be implemented by the prior art. Specifically, the non-access stratum processing module of the MTC device includes: an MM protocol layer processing module 1901, configured to authenticate the MTC device with a core network MSC through the MM protocol layer; a Security protocol layer processing module 1902, configured to encrypt an SMS short message with the core network MSC through the Security protocol layer processing module; and an SMS protocol layer processing module 1903, configured to transmit an SMS message with the core network MSC through the SMS protocol layer processing module.

In this embodiment, the MTC device includes the MM layer processing module that can perform an authentication function, so as to avoid problems such as an illegal access and a middle attack that are brought by a convergence effect formed by the gateway on the MTC device; and the MTC device includes the Security protocol layer processing module that can perform encryption, thereby guaranteeing the transmission security of the service.

FIG. 20 is a schematic structural diagram of an MTC device when based on a GPRS packet service according to an embodiment of the present invention. The MTC device includes a PAN protocol stack processing module 2005, configured to access a gateway; a network adaptation module 2004, configured to perform network adaptation; and a non-access stratum processing module, where the PAN protocol stack processing module may be implemented by the prior art. Specifically, as shown in FIG. 20a, on a control plane, the non-access stratum processing module of the MTC device includes: a GMM/SM protocol layer processing module 2001, where the GMM protocol layer processing module is configured to authenticate the MTC device with a core network SGSN through the GMM protocol layer processing module and the SM protocol layer processing module is configured to perform session management with the core network SGSN through the SM protocol layer processing module; and an LLC protocol layer processing module 2002, configured to perform encryption with the core network SGSN through the LLC protocol layer processing module. As shown in 20b, on a user plane, the non-access stratum includes: an SNDCP protocol layer processing module 2003, configured to perform header compression, by the MTC device, with the core network SGSN through an SNDCP protocol layer processing module; an LLC protocol layer processing module 2006, configured to encrypt a service with the core network SGSN through an LLC protocol layer processing module; and an IP application layer processing module 2007, configured in that the MTC device transparently transmits an IP package to a GGSN.

In this embodiment, the MTC device includes the GMM layer processing module that can perform an authentication function, so as to avoid problems such as an illegal access and a middle attack that are brought by a convergence effect formed by the gateway on the MTC device; and the MTC device includes the LLC protocol layer processing module that can perform encryption, thereby guaranteeing the transmission security of the service.

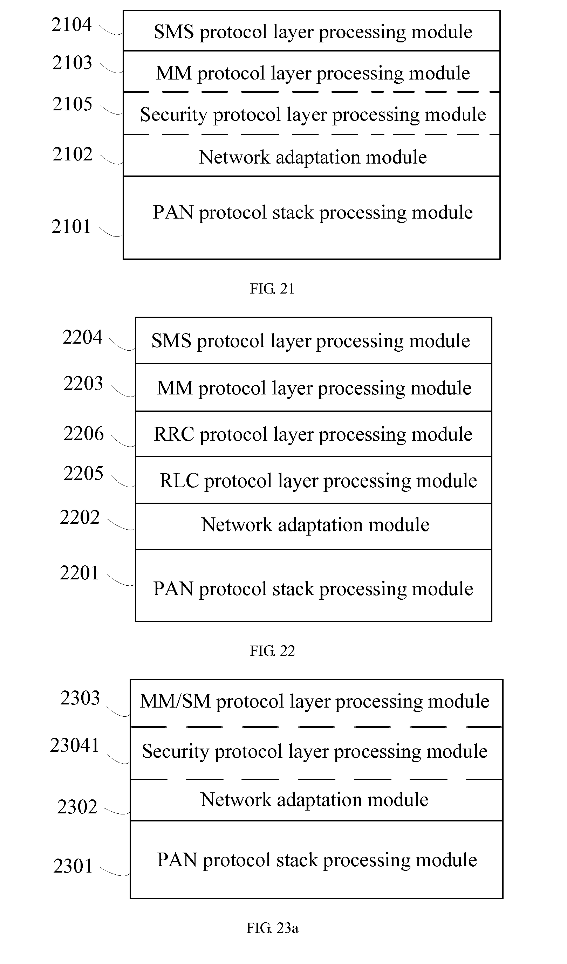

FIG. 21 is a schematic structural diagram of an MTC device when based on a UMTS short message service according to an embodiment of the present invention. As shown in FIG. 21, the MTC device includes a PAN protocol stack processing module 2101, configured to access a gateway; a network adaptation module 2202, configured to perform network adaptation; and a non-access stratum processing module, where the PAN protocol stack processing module may be implemented by the prior art. Specifically, the non-access stratum processing module of the MTC device includes: an MM protocol layer processing module 2103, configured to authenticate an MTC device with a core network MSC/SGSN through the MM protocol layer processing module; and an SMS protocol layer processing module 2104, configured to transmit an SMS message with the core network MSC/SGSN through the SMS protocol layer processing module.

Furthermore, the non-access stratum processing module may further include: a Security protocol layer processing module 2105, configured to encrypt an SMS short message with the core network MSC/SGSN through the Security protocol layer processing module.

In this embodiment, the MTC device includes the MM layer processing module that can perform an authentication function, so as to avoid problems such as an illegal access and a middle attack that are brought by a convergence effect formed by the gateway on the MTC device; and the MTC device includes the Security protocol layer processing module that can perform encryption, thereby guaranteeing the transmission security of the service.

FIG. 22 is a schematic structural diagram of an MTC device when based on a UMTS short message service according to another embodiment of the present invention. As shown in FIG. 22, the MTC device includes a PAN protocol stack processing module 2201, configured to access a gateway; a network adaptation module 2202, configured to perform network adaptation; a non-access stratum processing module; and an access stratum upper layer of access stratum processing module, configured to exchange signaling and transmit data with a core network. The PAN protocol stack processing module configured to access the gateway may be implemented by the prior art. Specifically, the non-access stratum processing module of the MTC device includes: an MM protocol layer processing module 2203, configured to authenticate the MTC device with a core network MSC/SGSN through the MM protocol layer processing module; and an SMS protocol layer processing module 2204, configured to transmit an SMS message with the core network MSC/SGSN through the SMS protocol layer processing module.

The access stratum upper layer of access stratum processing module includes: an RLC protocol layer processing module 2205, configured to encrypt an SMS short message through the RLC protocol layer processing module; and an RRC protocol layer processing module 2206, configured to perform radio resource control with an RNS through the RRC protocol layer processing module.

In this embodiment, the MTC device includes the MM layer processing module that can perform an authentication function, so as to avoid problems such as an illegal access and a middle attack introduced by a convergence effect formed by the gateway on the MTC device; and the MTC device includes the RLC protocol layer processing module that can perform encryption, thereby guaranteeing the transmission security of the service.

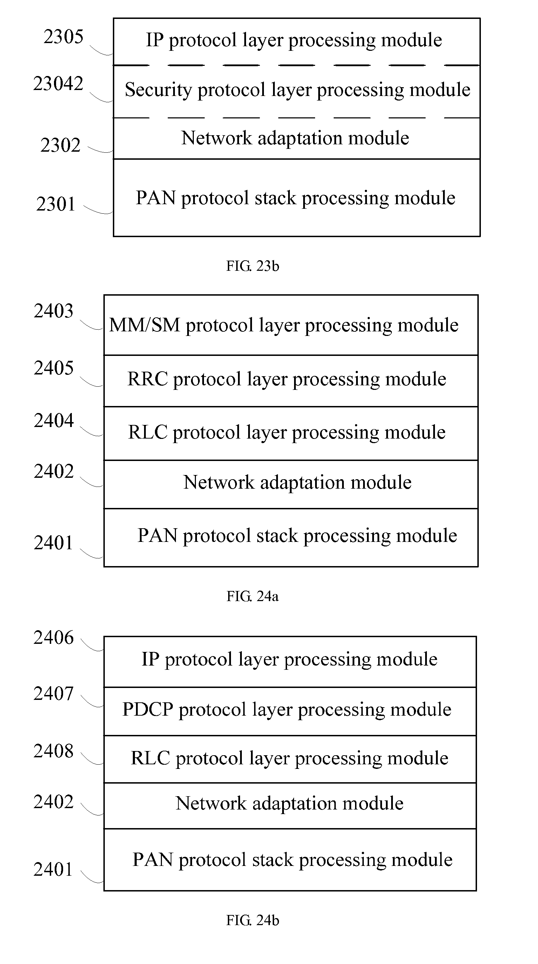

FIG. 23 is a schematic structural diagram of an MTC device when based on a UMTS packet service according to an embodiment of the present invention. The MTC device includes a PAN protocol stack processing module 2301, configured to access a gateway; a network adaptation module 2302, configured to perform network adaptation; and a non-access stratum processing module. The PAN protocol stack processing module may be implemented by the prior art. Specifically, as shown in FIG. 23a, on a control plane, the non-access stratum processing module of the MTC device includes an MM/SM protocol layer processing module 2303, where the MM protocol layer processing module is configured to authenticate an MTC device with a core network SGSN through the MM protocol layer processing module and the SM protocol layer processing module is configured to perform session management with the core network SGSN through the SM protocol layer processing module; and as shown in FIG. 23b, on a user plane, the non-access stratum processing module includes an IP application layer processing module 2305, configured to transparently transmit an IP package to a GGSN.

Furthermore, on the user plane and the control plane, the non-access stratum processing module may further include: Security protocol layer processing modules 23042 and 23041, configured to encrypt signaling or a service with the core network SGSN through the Security protocol layer processing modules.

In this embodiment, the MTC device includes the MM layer processing module that can perform an authentication function, so as to avoid problems such as an illegal access and a middle attack that are brought by a convergence effect formed by the gateway on the MTC device; and the MTC device includes the Security protocol layer processing module that can perform encryption, thereby guaranteeing the transmission security of the service.

FIG. 24 is a schematic structural diagram of an MTC device when based on a UMTS packet service according to another embodiment of the present invention. As shown in FIG. 24, the MTC device includes a PAN protocol stack processing module 2401, configured to access a gateway; a network adaptation module 2402, configured to perform network adaptation; a non-access stratum processing module; and an access stratum upper layer of access stratum processing module, configured to exchange signaling or transmit data with a core network, where the PAN protocol stack processing module may be implemented by the prior art. Specifically, as shown in FIG. 24a, on a control plane, the non-access stratum processing module of the MTC device includes: an MM/SM protocol layer processing module 2304, where the MM protocol layer processing module is configured to authenticate an MTC device with a core network SGSN through the MM protocol layer processing module and the SM protocol layer processing module is configured to perform session management with the core network SGSN through the SM protocol layer processing module; and the access stratum upper layer of access stratum processing module includes: an RLC protocol layer processing module 2404, configured to perform encryption with a base station subsystem through the RLC protocol layer processing module; and an RRC protocol layer processing module 2405, configured to perform radio resource control with the base station subsystem through the RRC protocol layer processing module.

On a user plane, as shown in FIG. 24b, the non-access stratum processing module includes: an IP application layer processing module 2406, configured to transparently transmit an IP package to a GGSN; and the access stratum upper layer of access stratum processing module includes: a PDCP protocol layer processing module 2407, configured to perform header compression with a base station subsystem RNS through the PDCP protocol layer processing module; and an RLC protocol layer processing module 2408, configured to encrypt a service with the base station subsystem through the RLC protocol layer processing module.

In this embodiment, the MTC device includes the MM layer processing module that can perform an authentication function, so as to avoid problems such as an illegal access and a middle attack that are brought by a convergence effect formed by the gateway on the MTC device; and the MTC device includes the RLC protocol layer processing module that can perform encryption, thereby guaranteeing the transmission security of the service.

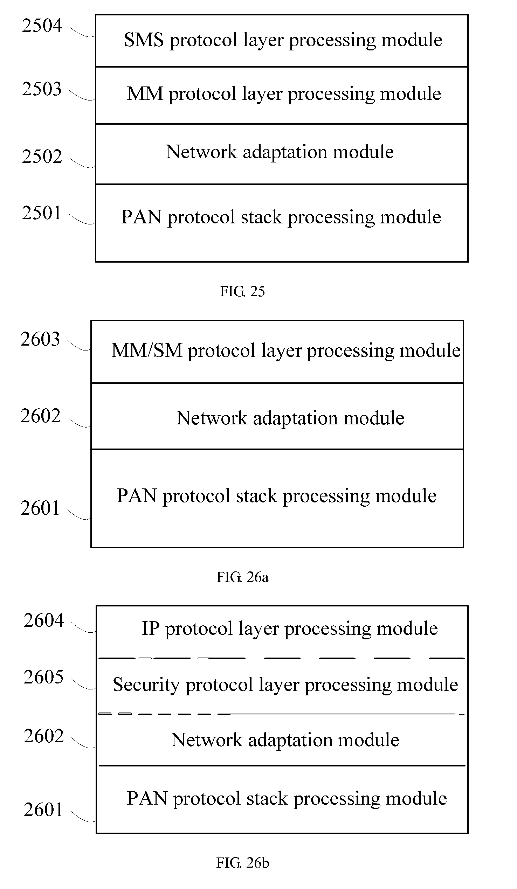

FIG. 25 is a schematic structural diagram of an MTC device when based on an SMS service of LTE according to an embodiment of the present invention. As shown in FIG. 25, the MTC device includes a PAN protocol stack processing module 2501, configured to access a gateway; a network adaptation module 2502, configured to perform network adaptation; and a non-access stratum processing module. The PAN protocol stack processing module may be implemented by the prior art. Specifically, the non-access stratum processing module of the MTC device includes: an MM protocol layer processing module 2503, configured to authenticate an MTC device with a core network MME through the MM protocol layer processing module; and an SMS protocol layer processing module 2504, configured to transmit an SMS message with the core network MME through the SMS protocol layer processing module.

In this embodiment, the MTC device includes the MM layer processing module that can perform an authentication function, so as to avoid problems such as an illegal access and a middle attack that are brought by a convergence effect formed by the gateway on the MTC device.

FIG. 26 is a schematic structural diagram of an MTC device when based on a packet service of LTE according to another embodiment of the present invention. As shown in FIG. 26, the MTC device includes a PAN protocol stack processing module 2601, configured to access a gateway; a network adaptation module 2602, configured to perform network adaptation; and a non-access stratum processing module, where the PAN protocol stack processing module may be implemented by the prior art. Specifically, as shown in FIG. 26a, on a control plane, the non-access stratum processing module of the MTC device includes: an MM/SM protocol layer processing module 2603, where the MM protocol layer processing module is configured to authenticate an MTC device with a core network MME through the MM protocol layer processing module and the SM protocol layer processing module is configured to perform session management with the core network MME through the SM protocol layer processing module; and as shown in FIG. 26b, on a user plane, the non-access stratum includes: an IP application layer processing module 2604, configured to transparently transmit an IP package to a GGSN.

Furthermore, on the user plane, the non-access stratum processing module further includes: a Security protocol layer processing module 2605, configured to encrypt data with Security protocol layer processing module of a core network S-GW.

In this embodiment, the MTC device includes the MM layer processing module that can perform an authentication function, so as to avoid problems such as an illegal access and a middle attack that are brought by a convergence effect formed by the gateway on the MTC device; and the MTC device includes the Security protocol layer processing module that can perform encryption, thereby guaranteeing the transmission security of the service.

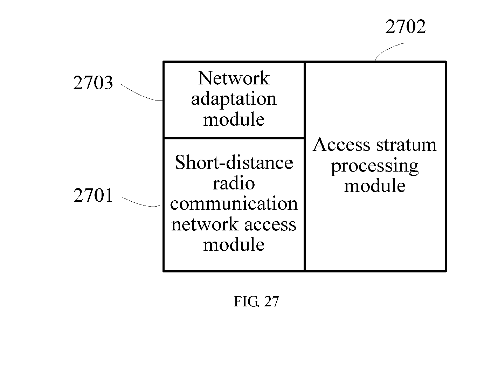

FIG. 27 is a schematic structural diagram of a gateway according to an embodiment of the present invention. As shown in FIG. 27, the gateway in the present invention includes:
a short-range wireless communication network access module 2701, configured to connect, through a short-range wireless communication network, an MTC device covered by the gateway, and receive, through the short-range wireless communication network, information reported by the MTC device; and
an access stratum processing module 2702, configured to perform access stratum signaling exchange or data transmission with a base station subsystem where the gateway is located.

Furthermore, in this embodiment, a network adaptation module 2703 may be further included, which is configured to perform network adaptation with the MTC device covered by the gateway.

The network adaptation module is further configured to: broadcast, to the MTC device, broadcast information of a cell where the gateway is located; or transmit information of a preset event to the MTC device, where the broadcast information includes: an access technology adopted by a cell where the gateway is currently located, link quality of the cell where the gateway is currently located, load information of the cell where the gateway is currently located, and so on; and the preset event includes: a stolen event occurring in the gateway, a foreign illegal intrusion event occurring in the gateway, an event that the gateway is jammed by an external wideband, and an event that the gateway goes offline from the cell where the gateway is currently located.

In this embodiment, the gateway covers multiple MTC devices through the short-range wireless communication network access module, and accesses the base station subsystem through the access stratum processing module, thereby reducing the load of the radio communication system and improving the utilization of a radio resource.

In another embodiment of the present invention, an access stratum processing module of a radio gateway further includes: a radio resource management protocol layer processing module, configured to establish a private connection between a gateway and a base station subsystem for each MTC device; or configured to establish a shared connection between the gateway and the base station subsystem for multiple MTC devices.

In the foregoing embodiment, the short-range wireless communication network access module may be one or a combination of the following: a wireless fidelity WiFi module, a zigbee module, a bluetooth module, an IrDA module, a home radio frequency Home RF module, and an ultra-wide band radio UWB module.

In this embodiment, the gateway can send, to the MTC device through a network adaptation layer signaling exchange module, information of the cell or the communication system where the gateway is located, so that the MTC device can adjust the gateway in time according to the information, thereby improving the stability of the transmission between the MTC device and the gateway.

The embodiments of the present invention may be applied in the long term evolution (Long Term Evolution, LTE for short) system, and may also be applied in the Wideband Code Division Multiple Access (Wideband Code Division Multiple Access, WCDMA for short) system, the Global System For Mobile Communications system (Global System For Mobile Communications, GSM for short), the Time Division-Synchronous Code Division Multiple Access (Time Division-Synchronous Code Division Multiple Access, TD-SCDMA), the Code Division Multiple Access CDMA2000, the Worldwide Interoperability for Microwave Access (Worldwide Interoperability for Microwave Access, WiMAX for short), and so on.

It should be noted that the sequence number of the embodiments is for ease of description, but does not represent preference order between the embodiments.

It may be clearly understood by persons skilled in the art that, for the purpose of convenient and brief description, for a detailed working process of the foregoing systems, devices, modules and units, reference may be made to the corresponding process in the method embodiments, and the details are not be described here again.

Through the description of the preceding embodiments, persons skilled in the art may clearly understand that the present invention may be implemented by means of software and a necessary general hardware platform, or of course, by means of a hardware, but the former is preferred in many cases. Based on such an understanding, the technical solutions of the present invention essentially, or the part contributing to the prior art may be implemented in the form of a software product. The computer software product is stored in a storage medium and includes several instructions for instructing a computer device (which may be a personal computer, a server, a network device, and the like) to execute all or part of the steps of the methods described in the embodiments of the present invention. The storage medium includes: any medium that may store program codes, such as a USB flash drive, a removable hard disk, a Read-Only Memory (ROM), a Random Access Memory (RAM), a magnetic disk, or an optical disk.

In the embodiments of the present invention, the disclosed system, device and method may be implemented in other manners without departing from the scope of the present invention. For example, the described apparatus embodiment is merely exemplary. For example, the division of the modules or units is merely logical function division and may be other division in actual implementation. For example, multiple units or components may be combined or integrated into another system, or some features may be ignored or not performed. The units described as separate parts may be or may not be physically separate, and parts displayed as units may be or may not be physical units, may be located in one position, or may be distributed on multiple network elements. A part of or all of the modules may be selected according to the actual need to achieve the obj ectives of the solutions of the embodiments. Persons of ordinary skill in the art may understand and implement the embodiment without creative efforts.

In addition, the schematic diagrams illustrating the system, device, method and different embodiments may be combined or integrated with other systems, modules, technologies or methods without departing from the scope of the present invention. In addition, the displayed or discussed mutual couplings or direct couplings or communication connection may be implemented through some interfaces. The indirect couplings or communication connections between the apparatuses or units may be implemented in electronic, mechanic, or other forms.

The foregoing descriptions are merely specific embodiments of the present invention, but are not intended to limit the protection scope of the present invention. Any variation or replacement readily figured out by persons skilled in the art within the technical scope disclosed in the present invention shall all fall within the protection scope of the present invention. Therefore, the protection scope of the present invention shall be subject to the protection scope of the appended claims.

## Claims

1. A radio communication system, comprising:
a machine type communication, MTC, device, wherein the MTC device is configured to access a gateway through a short-range wireless communication network, and the MTC device further comprises a non-access stratum, and exchanges signaling or transmits data, through the non-access stratum, with a non-access stratum of a core network where a base station subsystem is located, wherein the gateway comprises an access stratum, and accesses the base station subsystem through the access stratum.

2. The system according to claim 1, wherein the MTC device further comprises an access stratum upper layer of access stratum, and exchanges signaling or transmits data with the base station subsystem through the access stratum upper layer of access stratum, wherein the access stratum upper layer of access stratum comprises one or a combination of the following:
a radio link control, RLC, protocol layer, configured to perform radio link control; and a radio resource control, RRC, protocol layer, configured to perform radio resource control.

3. The system according to claim 1, wherein the MTC device is further configured to perform network adaptation with the gateway.

4. The system according to any one of claims 1 to 3, wherein the gateway performs the network adaptation with the MTC device in one or a combination of the following manners:
sending, by the gateway, broadcast information of a cell where the gateway is located to the MTC device; or
sending, by the gateway, information of the preset event to the MTC device when a preset event occurs, wherein the broadcast information comprises one or a combination of the following: an access technology adopted by a cell where the gateway is currently located, link quality of the cell where the gateway is currently located, and load information of the cell where the gateway is currently located;
the preset event comprises one or a combination of the following: a stolen event occurring in the gateway, a foreign illegal intrusion event occurring in the gateway, an event that the gateway is jammed by an external wideband, and an event that the gateway goes offline from the cell where the gateway is currently located.

5. The system according to claim 1, wherein when based on a general packet radio service technology GPRS packet service,
on a control plane, the non-access stratums of the MTC device and those of the core network SGSN at the same time comprise:
a GPRS mobility management, GMM, protocol layer, configured to authenticate the MTC device;
a logical link control, LLC, protocol layer, configured to encrypt signaling; and
a session management, SM, protocol layer, configured to perform session management; and
on a user plane, the non-access stratums of the MTC device and those of the core network SGSN at the same time comprise:
a subnetwork dependent convergence protocol SNDCP protocol layer, configured to perform header compression; and
a logical link control, LLC, protocol layer, capable of encrypting the service.

6. The system according to claim 1, wherein when based on a general packet radio service technology GPRS short message service, SMS,
the non-access stratums of the MTC device and those of the core network SGSN at the same time comprise:
a GPRS mobility management, GMM, protocol layer, configured to authenticate the MTC device;
a logical link control, LLC, protocol layer, configured to perform encryption; and
a short message service, SMS, protocol layer, configured to transfer a short message between the MTC device and the core network.

7. An MTC device, comprising:
a short-range wireless communication network access module, configured to access, through a short-range wireless communication network, a gateway where the MTC device is located, and report data of the MTC device through the short-range wireless communication network; and
a non-access stratum processing module, configured to perform non-access stratum signaling exchange or data transmission with a non-access stratum processing module of a core network where the MTC device is located.

8. The device according to claim 7, further comprising:
an access stratum upper layer of access stratum processing module, configured to exchange signaling or transmit data with an access stratum upper layer of access stratum processing module of a base station subsystem access stratum upper layer of access stratum, wherein the access stratum upper layer of access stratum processing module comprises one or a combination of the following:
a radio link control protocol layer processing module, configured to perform radio link control; and a radio resource control protocol layer processing module, configured to perform radio resource control.

9. The device according to claim 7, wherein when based on a general packet radio service technology GPRS packet service, the MTC device:
on a control plane, the non-access stratum processing module comprises:
a GPRS mobility management, GMM, protocol layer processing module, configure to authenticate the MTC device with the core network SGSN through the GMM protocol layer processing module;
a logical link control, LLC, protocol layer processing module, configure to perform encryption with the core network SGSN through the LLC protocol layer processing module, and
a session management, SM, protocol layer processing module, configure to perform session management with the core network SGSN through the SM protocol layer processing module; and
on a user plane, the non-access stratum processing module comprises:
a subnetwork dependent convergence protocol SNDCP protocol layer processing module, configure to perform header compression with a SNDCP protocol layer processing module of the core network SGSN; and
a logical link control, LLC, protocol layer processing module, configure to perform encryption with a LLC protocol layer processing module of the core network SGSN.

10. The device according to claim 7, wherein when based on a general packet radio service technology GPRS short message service SMS,
the non-access stratum processing module of the MTC device comprises:
a GPRS mobility management, GMM, protocol layer processing module, configure to authenticate the MTC device;
a logical link control, LLC, protocol layer processing module, configure to perform encryption; and
a short message service, SMS, protocol layer processing module, configure to transfer a short message between the MTC device and the core network.

11. The device according to any one of claims 7 to 10, further comprising:
a network adaptation module, configured to perform network adaptation with the gateway where the MTC device is located; and
a gateway reselection module, configured to perform gateway reselection according to broadcast information or information of a preset invention sent by the gateway and received by the gateway adaptation module.

12. The device according to claim 11, wherein the short-range wireless communication network access module is one or a combination of the following: a wireless fidelity WiFi module, a zigbee module, a bluetooth module, an IrDA module, a home radio frequency Home RF module, and an ultra-wideband radio, UWB, module.

13. A gateway, comprising:
a short-range wireless communication network access module, configured to connect, through a short-range wireless communication network, an MTC device covered by the gateway, and receive, through the short-range wireless communication network, information reported by the MTC device;
an access stratum processing module, configured in that the gateway accesses a base station subsystem and performs signaling exchange or data transmission with an access stratum processing module of the base station subsystem; and
a network adaptation module, configured in that the gateway performs network adaptation with MTC device covered by the gateway.

14. The gateway according to claim 13, wherein the access stratum processing module comprises: a radio resource management protocol layer processing module, wherein the radio resource management protocol layer processing module is configured to establish a private connection between the gateway and the base station subsystem for each MTC device, or the radio resource management protocol layer processing module is configured to establish a shared connection between the gateway and the base station subsystem for multiple MTC devices.

15. The gateway according to claim 14, wherein the network adaptation module is configured to:
broadcast, to the MTC device, broadcast information of a cell where the gateway is located; or
transmit information of a preset event to the MTC device, wherein the broadcast information comprises: an access technology adopted by a cell where the gateway is currently located, link quality of the cell where the gateway is currently located, and load information of the cell where the gateway is currently located; and the preset event comprises: a stolen event occurring in the gateway, a foreign illegal intrusion event occurring in the gateway, an event that the gateway is jammed by an external wideband, and an event that the gateway goes offline from the cell where the gateway is currently located.
